# EUROPÄISCHE PATENTSCHRIFT

(11) **EP 0 807 262 B1**
(45) Veröffentlichungstag und Bekanntmachung des Hinweises auf die Patenterteilung: **19.12.2001**
(21) Anmeldenummer: 96938188.8
(22) Anmeldetag: 13.11.1996
(51) Int. Cl.: G01S 17/36, G01S 7/499

(54) **ELEKTRO-OPTISCHES MESSGERÄT FÜR ABSOLUTE DISTANZEN**
ELECTRO-OPTICAL MEASURING DEVICE FOR ABSOLUTE DISTANCES
APPAREIL DE MESURE ELECTRO-OPTIQUE POUR MESURER DES DISTANCES ABSOLUES

(30) Priorität: 15.11.1995 DE 19542490
(43) Veröffentlichungstag der Anmeldung: 19.11.1997
(73) Patentinhaber: Leica Geosystems AG, 9435 Heerbrugg (CH)
(72) Erfinder: MEIER, Dietrich, CH-5015 Niedererlinsbach (CH)
(74) Vertreter: Stamer, Harald, Dipl,-Phys.
(86) Internationale Anmeldenummer: EP9604955
(87) Internationale Veröffentlichungsnummer: WO9718486

(56) Entgegenhaltungen:
- EP-A- 0 313 518
- US-A- 3 200 698

## Beschreibung

Die Erfindung betrifft ein elektro-optisches Meßgerät für absolute Distanzen zu einem Zielpunkt mit Mitteln zur Erzeugung eines kollimierten, linear polarisierten Laserstrahls, elektro-optischen Modulationsmitteln zur Modulation und Demodulation der Polarisation des Laserstrahls mit einer bestimmten Folge von Modulationsfrequenzen, einem mit dem Zielpunkt gekoppelten Reflektor, elektro-optischen Detektionsmitteln zur Bestimmung des Wertes der Modulationsphase im Bereich minimaler Helligkeit zwischen dem gesendeten modulierten und dem vom Zielpunkt empfangenen und demodulierten Laserstrahl und der zugehörigen Modulationsfrequenz, sowie mit Mitteln zur Berechnung der Distanz aus zwei benachbarten Modulationsfrequenzen mit der Modulationsphase Null.

Ein solches Meßgerät ist aus der EP 0 205 406 B1 bekannt. Das diesem Meßgerät zugrundeliegende Prinzip entspricht der sogen. Zahnradmethode nach Fizeau. Dabei wurde ursprünglich ein Lichtstrahl durch ein Zahnrad periodisch unterbrochen, dann zu einem Reflektor gesendet und schließlich am Zahnrad ein zweites Mal periodisch unterbrochen. Aus der Drehzahl des Zahnrades im Falle einer Auslöschung des zurückkehrenen Lichtstrahls läßt sich dessen Laufzeit durch Vergleich mit der Laufzeit eines Zahnradzahns bis zur nächsten Zahnlücke bestimmen.

Bei dem in der EP 0 205 406 B1 beschriebenen Meßgerät wird anstelle des Zahnrades ein elektro-optischer Kristall als Modulator verwendet. Dabei wird der Meßstrahl nicht mehr periodisch unterbrochen, sondern eine elliptische Polarisation wird periodisch verändert. Moduliert man im elektro-optischen Kristall einen linear polarisierten Lichtstrahl, dessen Polarisationsebene bezüglich der Kristallachsen geeignet liegt, mit einem Sinussignal von einigen 100 MHz und erfahren reflektierte Strahlanteile beim zweiten Kristalldurchgang in umgekehrter Richtung eine weitere Modulation, so erhält man bei bestimmten Modulationsfrequenzen die ursprünglich zeitlich konstante Linearpolarisation wieder zurück und beobachtet an einem geeigneten Polarisations-Analysator Helligkeitsauslöschung.

In diesem Fall befindet sich in jedem Moment gerade eine ganze Anzahl von Modulations-Wellenlängen auf der doppelten Meßdistanz zwischen Modulatorkristall und Reflektor. Beobachtet man kein Helligkeitsminimum, so kann man ein solches herbeiführen, indem man die Meßdistanz oder die Modulations-Wellenlänge ändert. Die Modulations-Wellenlänge wird über die Modulations-Frequenz verändert, die der Laufzeit der Modulations-Wellenlängen proportional ist. Die Bedingung einer ganzen Anzahl von Modulations-Wellenlängen auf der Meßstrecke kann ersichtlich bei unterschiedlichen Modulations-Frequenzen eingestellt werden. Aus zwei benachbarten solchen Modulations-Frequenzen läßt sich die absolute Distanz dann eindeutig bestimmen.

Als Modulatoren werden vorzugsweise Lithium-Tantalat -Kristalle verwendet, da diese für die Polarisations-Modulation eine relativ niedrige Modulations-Spannung benötigen. Die Modulations-Wechselspannung wird dem Kristall dabei üblicherweise induktiv durch Anordnung in einem Mikrowellen-Hohlraum-Resonator aufgeprägt. Ein Nachteil dieser Kristalle ist jedoch, daß die für die Modulation wirksame statische Doppelbrechung sehr stark temperaturabhängig ist. Das bedeutet, daß sich das bei dem Meßprinzip ausgewertete Helligkeitsminimum in Abhängigkeit von der Temperatur verflacht und sogar zum Maximum werden kann und die Distanzmessung damit ungenau oder unmöglich wird.

Zur Kompensation der vorgenannten Temperatureinflüsse kann dem Modulatorkristall eine der Licht-Wellenlänge des Meßstrahls angepaßte Viertelwellenlängenplatte nachgeschaltet werden. Diese wird von dem Meßstrahl bei der Rückkehr vom Reflektor nochmals durchlaufen, wobei durch den zweimaligen Durchlauf eine Polarisationsdrehung um 90° erfolgt und sich damit die temperaturbedingten Doppelbrechungseffekte des Modulatorkristalls durch das Vertauschen der Polarisation bezüglich der Kristallachsen zu jedem Zeitpunkt kompensieren.

Das Meßgerät wird üblicherweise mit einem in Meßstrahlenrichtung am Zielort liegenden Retro-Reflektor verwendet, z.B. einem Würfelecken-Reflektor. Die maximal erreichbare Meßgenauigkeit eines solchen Systems liegt im µ-Bereich. Um eine möglichst vollständige Polarisations-Demodulation zu erzielen muß sichergestellt werden, daß durch andere optische Komponenten kein Streulicht überlagert wird, die Strahlrichtungen des gesendeten und des zurückkehrenden Strahls übereinstimmen und daß die Polarisation durch externe Komponenten möglichst wenig beeinflußt wird, da sonst die oben erwähnte Kompensation mittels λ/4-Platte gestört wird.

Zur Bestimmung der Modulationsphase, d.h. zur empfindlichen Detektion der minimalen Lichthelligkeit wird auf das Modulationssignal von einigen 100 MHz eine Frequenzmodulation von ca. 10 kHz mit Hub von 500 kHz aufgebracht. Die Amplitude des frequenzdemodulierten Signales ist ein Maß für die Modulationsphase. Insbesondere ist im Helligkeitsminimum die Modulationsphase gleich Null (erste Ableitung).

Aus der EP 0 313 518 B1 ist eine Weiterbildung des vorstehend beschriebenen Meßgerätes bekannt, bei der auch die Distanzmessung auf natürliche Objekte oder Reflexfolien möglich ist. Dazu ist es erforderlich, das polarisations-modulierte kollimierte Meßstrahlenbündel auf den Zielgegenstand zu fokussieren. Diese Lösung geht von der Erkenntnis aus, daß bei einem ausgedehnten Strahlfleck auf einem Zielgegenstand mit einer breiten Streucharakteristik zuviele zurückkommende Strahlanteile bei der Demodulation im Kristall neue und schräge Wege mit unterschiedlicher Modulationswirkung durchlaufen. In diesem Fall kann keine einheitliche Linearpolarisation für ein Helligkeitsminimum der Modulationsphase gewonnen werden. Arbeitet man hingegen infolge der Fokussierung mit einem sehr kleinen Strahlfleck, so gehen vom ursprünglichen Strahlweg weggestreute Strahlanteile einfach verloren, ohne im Meßgerät das gesuchte Minimum zu verdecken. Wegen der Fokussierung des Strahlflecks ist bei dieser Anordnung die Messung von der Auftreffrichtung des Meßstrahlenbündels auf den Zielpunkt weitgehend unabhängig.

Weitere Ausführungsformen von polarisationsmodulierten Fizeau-Systemen sind bekannt.

Aus der US 3,200,698 ist ein Meßgerät bekannt, mit dem der korrekte Abstand zu einem reflektierenden Objekt eingestellt werden kann. Es wird ein linear polarisierter Lichtstrahl durch einen in einem Mikrowellenresonator angeordneten doppelbrechenden Kristall periodisch elliptisch polarisiert. Nach Reflexion an dem Objekt passiert der elliptisch polarisierte Lichtstrahl erneut den Kristall. Bei korrekt eingestellter Entfernung des Objekts wird die elliptische Polarisation in die lineare Polarisation rückgewandelt, und die von einem Analysator durchgelassene Intensität ist minimal. Das Objekt wird aus einer vorgegebenen Position mit einer Mikrometerspindel solange verschoben, bis das Minimumsignal eingestellt ist.

In der US 3,424,531 wird ein Abstandsmeßgerät beschrieben, bei dem zwei Meßstrahlenbündel unterschiedlicher Wellenlänge auf ein Meßobjekt gerichtet werden. In einem von beiden Strahlenbündeln gemeinsam durchlaufenen Hin- und Rückweg befindet sich ein Modulator, der die Strahlenbündel periodisch unterbricht. Das Meßverfahren entspricht dem der Zahnradmethode. Durch die Messung mit unterschiedlichen Wellenlängen sollen atmosphärische Turbulenzen und Veränderungen des Brechungsindex in der Meßstrecke erfaßt und damit eine Korrektur der Weglängenmessung durchgeführt werden.

Aus der SU 882 734 C ist ein beweglicher Roboter bekannt, der eine optische Meßeinrichtung für absolute Distanzmessungen zu einem feststehenden Reflektor enthält. Bei Bewegung des Roboters wird das Meßstrahlenbündel über einen automatisch gesteuerten Trackingspiegel permanent auf den Reflektor gerichtet. Die Distanzmeßeinrichtung arbeitet mit einem amplituden-modulierten Laserstrahl und ist wesentlich ungenauer als die vorbeschiebene Fizeau-Methode.

Aus der US 4 714 339 C ist eine ortsfeste Vorrichtung zur automatischen Verfolgung eines an einem Roboterarm befestigten Reflektors bekannt, mit der außerdem die Distanzverschiebungen bei Bewegung des Reflektors im Raum gemessen werden können. Zur Messung der Distanzen zwischen zwei Reflektororten wird ein Laser-Interferometer-System verwendet. Die relative Distanzmessung mit einem solchen System ist äußerst genau und liegt im sub-µ-Bereich.

Aus der DE 43 06 884 A1 ist ein phasenmoduliertes Laser-Interferometer bekannt, das vorzugsweise im Referenzstrahlengang einen Phasenmodulator enthält. Aus dem phasenmodulierten Referenzstrahlenbündel und dem Meßstrahlenbündel wird ein Überlagerungssignal gebildet. Der Phasenmodulator wird mit einem sinusförmigen Signal angesteuert, aus dem auch noch ein dazu phasengekoppeltes Mischfrequenz-Signal abgeleitet wird. Das Überlagerungssignal wird mit der Mischfrequenz multiplikativ gemischt und nach einer Bandpaßfilterung hinsichtlich der zu messenden Wegdifferenz entlang der Meßstrecke ausgewertet. Das Verfahren vereinfacht die Ansteuerung des Phasenmodulators.

Bei Interferometem muß für absolute Distanzangaben die Messung von einem definierten Referenzpunkt ausgehen und darf nicht unterbrochen werden. An den Laserstrahl werden sehr hohe Anforderungen bezüglich Kohärenz und Modenstabilität gestellt.

Beim Versuch, den Laserstrahl eines nach der Fizeau-Methode arbeitenden Meßgerätes über einen automatisch gesteuerten Trackingspiegel auf einen ortsveränderlich angeordneten Reflektor zu richten, hat sich ergeben, daß durch die Reflexion am schräg zur Strahlrichtung stehenden Trackingspiegel und durch die schrägstehenden Flächen des Würfelecken-Reflektors die Polarisation des Meßstrahls so stark verändert wird, daß das zu messende Helligkeitsminimum nicht mehr ausreichend genau detektierbar ist, um die systembedingte Meßgenauigkeit erreichen zu können.

Der Erfindung liegt daher die Aufgabe zugrunde, die Abhängigkeit der Meßgenauigkeit eines nach der Fizeau-Methode arbeitenden Meßgerätes von den Eigenschaften des Modulatorkristalls, von Störlichteinflüssen und extern aufgeprägter zusätzlicher Polarisation weitgehend unabhängig zu machen. Damit soll insbesondere erreicht werden, daß das Meßgerät in Verbindung mit einem strahlumlenkenden Trackingspiegel und in Kombination mit einem Interferometer-Meßsystem einsetzbar ist.

Diese Aufgabe wird bei einem Meßgerät der eingangs genannten Art erfindungsgemäß dadurch gelöst, daß die Modulationsmittel einen Modulatorkristall mit Elektroden enthalten, die mit einer veränderbaren Gleichspannungsquelle verbunden sind, und eine Steuervorrichtung vorgesehen ist, die die Bestimmung des Wertes der Modulationsphase im Bereich minimaler Helligkeit bei der zugehörigen Modulations-Frequenz nacheinander bei unterschiedlichen Gleichspannungswerten über eine volle Periode der Grundpolarisation des Modulatorkristalls auslöst, die gemessenen Werte speichert und mittelt, bei von Null abweichendem Mittelwert die Messung bei einer geringfügig veränderten Modulations-Frequenz wiederholt und durch Interpolation die dem Modulationsphasen-Mittelwert Null zugehörige Modulations-Frequenz bestimmt.

Die gleichspannungsabhängige Polarisation kann dem üblichen Modulatorkristall überlagert werden. Es ist jedoch von Vorteil, wenn zwei Modulatorkristalle hintereinander angeordnet werden, wobei einer die hochfrequente Polarisations-Modulation ausführt und der andere eine gleichspannungsabhängige Grundpolarisation bewirkt. Damit werden insbesondere konstruktive Schwierigkeiten vermieden, die aus der Anordnung des einen Modulatorkristalls in einem Mikrowellen-Hohlraum-Resonator entstehen.

Die Steuervorrichtung enthält vorteilhafterweise einen Generator zur stufenweisen Erhöhung der Gleichspannungswerte über eine Periode der Grundpolarisation.

Mit der an den Modulatorkristall gelegten Gleichspannung wird seine Grundpolarisation geändert. Als Grundpolarisation wird die Polarisation bezeichnet, die bei fehlender Hochfrequenzmodulation und bei Eintritt von linear polarisiertem Licht unter 45° zur senkrecht ausgerichteten optischen z-Achse am Kristallausgang auftritt. Abhängig von der gegebenen Kristallänge wiederholt sich die Stellung der Grundpolarisation periodisch mit bestimmten Gleichspannungswerten. Für eine Veränderung der Grundpolarisation um 360°, d.h. eine Verzögerung der senkrecht zur optischen Achse schwingenden s-Komponente in bezug auf die parallel zur optischen Achse schwingenden p-Komponente um 360°, sind z.B. beim eingesetzten Lithium-Tantalat -Kristall ca. 500 Volt erforderlich (Halbwellenspannung ca. 250 V).

Erfindungsgemäß wird die Grundpolarisation jeweils nach Auffinden eines erkennbaren Helligkeitsminimums bei der diesem Wert zugehörigen Modulations-Frequenz einmal über eine volle Periode verändert. Beim Durchlauf einer vollen Periode der Grundpolarisation ergibt sich eine gemittelte Modulationsphase, so daß für die weitere Messung nur noch die korrekte Bestimmung der Modulations-Frequenz entscheidend ist. Diese wird dadurch erkannt, daß die in Abhängigkeit von der Grundmodulation bestimmten Werte der Modulationsphase nur dann im Mittel zu Null werden, wenn die gewählte Modulations-Frequenz der dem Minimum der Modulationsphase entsprechenden Modulations-Frequenz entspricht. Durch schrittweise Veränderung der Modulations-Frequenz in der Nähe des Helligkeitsminimums kann aus den Werten der gemittelten Modulationsphase der zugehörige Wert der Modulations-Frequenz interpoliert werden.

Die Veränderung der Grundpolarisation soll über eine volle Periode erfolgen. Wegen des doppelten Durchgangs des Lichts durch den Kristall ergibt sich am Detektor eine ganze Periode bereits beim Anlegen der Halbwellenspannung am Kristall, denn die Verzögerung der s- und p-Komponenten beträgt beim Hin- und Rücklauf je 180°. Vorteilhafterweise wird aber die Veränderung der Grundpolarisation über eine ganze Periode am Kristall erzeugt, da festgestellt wurde, daß die dabei am Detektor entstehenden zwei Perioden der Meßwerte nicht genau übereinstimmen. Das ist darauf zurückzuführen, daß der Beginn und das Ende der Perioden der Grundpolarisation temperaturabhängig und somit unbestimmt sind. Die Mittelung über zwei Perioden am Detektor liefert daher einen verbesserten Mittelwert.

Bei dem erfindungsgemäßen Meßgerät kann nunmehr der Reflektor im Raum frei bewegbar angeordnet und der Laserstrahl über einen automatisch gesteuerten Trackingspiegel dem Reflektor nachgeführt sein. Der Laserstrahl wird zweckmäßigerweise über einen Teilerspiegel auf den Trackingspiegel geleitet, so daß ein Teil des vom Reflektor zurückkommenden Laserstrahls durch den Teilerspiegel hindurch auf einen positionsempfindlichen Detektor geleitet werden kann, der die Nachführung des Trackingspiegels bewirkt.

Insbesondere ist es auch möglich, einen dichroitischen Teilerspiegel zu verwenden, so daß für die Trackingregelung und Ablenkwinkelbestimmung eine andere Wellenlänge verwendet werden kann als für das Meßgerät. Insbesondere kann das aus US 4 714 339 C bekannte Laser-Interferometer-System mit Trackingregelung über den dichroitischen Teilerspiege auf den Laserstrahl für die Absolutdistanz-Messung gekoppelt und bei Rückkehr vom Reflektor von diesem wieder entkoppelt werden. Dies kann von Vorteil sein, da das vorteilhafterweise verwendete Heterodyn-Interferometer-System als kohärente Lichtquelle einen HeNe-Laser benötigt, während für das Fizeau-Meßsystem eine Laserdiode verwendet werden kann, da hier nur die Eigenschaft der Linearpolarisation für die elektro-optische Polarisationsmodulation entscheidend ist.

Da der in einem Laser-Heterodyn-Interferometer verwendete Laserstrahl aber auch linearpolarisiert ist und es auf die Lichtwellenlänge beim Fizeau-Meßverfahren nicht ankommt, kann mit Vorteil der Meßstrahl eines nach der Doppler-Methode arbeitenden Laser-Heterodyn-Interferometers, wie es z. B. in EP 0 194 941 A2 beschrieben ist, auch als Meßstrahl im Fizeau-System benutzt werden. Entscheidend ist, daß die Polarisations-Modulation im Fizeau-System die Kohärenz des Interferometerstrahls nicht verändert und damit die Auswertung der Dopplerverschiebung der Lichtfrequenz nicht gestört wird. Andererseits beeinflußt die Verschiebung der Lichtfrequenz im Heterodyn-Interferometer nicht das Fizeau-Meßverfahren, da hier nur die Wellenlänge der Polarisations-Modulation entscheidend ist. Der Polarisations-Modulator kann daher in den vom Interferometer kommenden Strahlengang eingefügt sein und es ist ihm ein Teilerspiegel vorzuschalten, über den ein Teil des vom Reflektor zurückkommenden Strahls abgezweigt und zur Überlagerung mit dem Referenzstrahlenbündel des Interferometers umgelenkt wird.

Beide Kombinationen eines Meßgerätes für absolute Distanzen mit einem Meßgerät für relative Distanzen eröffnen z.B. neue Möglichkeiten für die Roboterkalibrierung. Im Ruhezustand könnnen mit Hilfe der Absolutmessung die Ausgangskoordinaten gemessen werden. Die gleichzeitige Auswertung der Interferometerdaten erlaubt eine Aussage über die mechanische Stabilität und evtl. Schwingeigenschaften des Robotersystems. Das Ausmessen einer darauffolgenden Roboterbewegung erfolgt mittels des Interferometers. Die Koordinaten der Endstellung sind dann durch die Interferometermessung gegeben, können aber durch erneute Absolutmessung überprüft werden. Eine Kopplung beider Meßinformationen ermöglicht darüber hinaus die Ermittlung von Absolut-Distanzen zu bewegten Zielen mit wesentlich gesteigerter Genauigkeit.

Die Erfindung wird nachfolgend anhand von schematisch dargestellten Ausführungsbeispielen näher beschrieben. Im einzelnen zeigen
- Fig. 1: das Meßgerät gekoppelt mit einem auf Interferometrie basierendem Tracking-System und
- Fig. 2: das Meßgerät integriert in den Interferometer-Strahlengang eines Tracking-Systems.

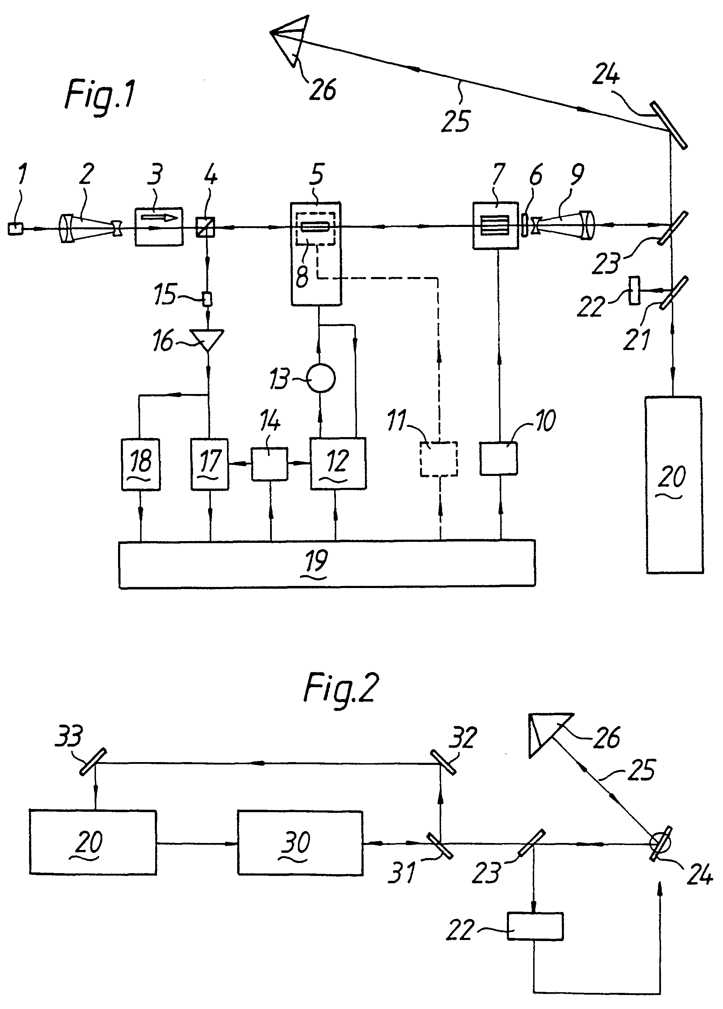

In Fig. 1 erzeugt eine Laserdiode 1 das Meßlicht. Es ist komponentenbedingt ca 100:1 linearpolarisiert. Nach einer Strahlfokussierungsoptik 2 durchläuft der enge und parallele Strahl eine optischen Isolator 3, der eine Störung des Laservorgangs durch zurückkommendes Licht verhindert. Ein polarisierender Strahlteiler 4 läßt nur die vorherrschende Linearpolarisations-Komponente der Laserdiode 1 in das Fizeau-System eintreten. Dieser Strahlteiler 4 dient außerdem als Polarisations-Analysator des Fizeau-Systems. Das danach auf die unter 45° gestellten Kristallachsen eines elektro-optischen Modulators 5 fallende Licht wird unter dem Einfluß eines auf den elektro-optischen Kristall einwirkenden elektrischen Wechselfeldes periodisch mit einer variablen Frequenz von ca. 850 bis 1000 MHz polarisations-moduliert. Eine λ/4-Platte 6 dient in bekannter Weise zur Kompensation der temperaturabhängigen Doppelbrechung im Modulatorkristall, indem durch die zweimalige λ/4-Verschiebung beim zurückkommenden Licht die Orientierung der Polarisation in Bezug auf die Kristallachsen des elektro-optischen Modulators vertauscht wird.

Zur Elimination des Einflusses der externen Zusatzpolarisation, die die Wirkungsweise der λ/4-Platte beeinträchtigt, ist ein weiterer elektro-optischer Kristall 7 vorgesehen, an den über die veränderbare Gleichspannungsquelle 10 eine Gleichspannung gelegt werden kann. Dabei ist es prinzipiell auch möglich, die Gleichspannung direkt an den Modulatorkristall 8 des Modulators 5 über eine veränderbare Gleichspannungsquelle 11 zu legen. Dies ist gestrichelt angedeutet. Der Kristall könnte auch durch Temperaturwechsel in seiner Doppelbrechung verändert werden. Wegen des damit verbundenen technischen Aufwandes werden diese beiden Alternativen nicht weiter beschrieben.

Ein Oszillator 13 dient zur Ansteuerung des elektro-optischen Modulators 5 mit der variablen und durch Programmierung einer phasenstabilen Schleife 12 gegebenen Modulations-Frequenz bei den bereits erwähnten 850 bis 1000 MHz. Die phasenstabile Schleife 12 enthält einen nicht dargestellten Synthesizer und ist durch eine PLL-Schaltung auf eine 10 MHz Quarzreferenz stabilisiert. Alle Systemfunktionen und Auswertungen werden durch eine Steuervorrichtung 19 mit einem µ-Prozessor koordiniert und durchgeführt.

Die benötigte Bandbreite des aus Oszillator 13, Modulator 5 und phasenstabiler Schleife 12 bestehenden Subsystems beträgt ca. 150 MHz. Die Frequenz wird beim Meßablauf so verstellt, daß ein Minimum an Rücklicht auf eine dem als Analysator wirkenden Strahlteiler 4 nachgeordnete fotoempfindliche Diode 15 fällt. Ein Verstärker 16 dient zur Verstärkung dieses Meßsignals.

Ein Wobbelgenerator 14 erzeugt in der Schleife 12 eine sinurförmige Frequenz-Modulation, die in einem phasenempfindlichen Detektor 17 (Lock-in-Verstärker) zur Detektion des Signalminimums benutzt wird. Die zusätzlich aufgebrachte Frequenz-Modulation verbessert die genaue Detektion der Minimalstelle. Wie bereits erwähnt, ergeben sich diese Minimalstellen beim Fizeau-Meßverfahren bei denjenigen Modulations-Frequenzen, bei denen eine gegebene Distanz zum Reflektor ein Vielfaches der entsprechenden halben Modulations-Wellenlänge ist. Aus den Frequenzen zweier solcher nebeneinander liegender Minimalstellen läßt sich die Absolutdistanz in der Steuervorrichtung 19 berechnen.

Im Unterschied zum phasenempfindlichen Detektor 17, in dem die Frequenz-Modulation ausgemessen wird, wird die Signalstärke, d.h. die allgemeine Lichthelligkeit, in einer Intensitäts-Meßschaltung 18 gemessen. Für ergänzende Informationen über das Fizeau-Meßverfahren wird auf die eingangs genannte EP 0 205 406 B1 verwiesen.

Für Meßweiten bis zu etwa 100 m werden kleine Strahldivergenzen des Meßstrahlenbündels benötigt. Dazu wird das Strahlenbündel in einem Kollimator 9 aufgeweitet. Dieses aufgeweitete Strahlenbündel wird über einen dichroitischen Strahlteiler 23 in den Meßstrahl 25 ein- und ausgekoppelt. Der Meßstrahl 25 wird über einen Trackingspiegel 24 auf den als Würfelecken-Reflektor dargestellten Reflektor 26 geführt.

Die Polarisation des Meßstrahls sollte nach dem Austritt aus dem Fizeau-System möglichst wenig verändert werden, da wie eingangs erwähnt zusätzliche zur Polarisations-Modulation auftretende konstante Polarisations-Änderungen zu Empfindlichkeitseinbußen des Meßsystems führen. Da schräg im Lichtstrahl liegende dielektrische Schichten, wie z.B. Strahlteilerschichten, einen starken Polarisationseffekt aufweisen, ist hier so weit wie möglich auf eine Kompensation oder Vermeidung von Polarisationseinflüssen zu achten. Bei fester Winkellage kann eine Kompensation dadurch erreicht werden, daß das Licht durch zwei identische, aber in Strahlrichtung um 90° verdrehte optische Komponenten geleitet wird.

Dies kann beim Strahlteiler 23 dadurch realisiert werden, daß dieser aus zwei identischen, zusammengefügten Strahlteilerschichten besteht.

Auch der Trackingspiegel 24 wird in seiner Beschichtung auf möglichst kleine Phasendifferenzen zwischen senkrecht und paralles polarisierten Komponenten über den benötigten variablen Einfallswinkelbereich optimiert. Zusätzliche Polarisationen lassen sich aber weder an diesem Bauelement noch am Reflektor 26 vermeiden.

In Fig. 1 ist weiterhin ein Interferometer-System 20 dargestellt, dessen Einzelheiten z.B. aus der bereits genannten US 4 714 339 C entnommen werden können. Der Meßstrahl dieses Systems hat eine andere Wellenlänge und wird ebenfalls über den Strahlteiler 23 in den Meßstrahl 25 ein- und ausgekoppelt. Ein Teil des vom Reflektor 26 zurückkommenden Interferometer-Lichts wird über einen weiteren Strahlteiler 21 zur TrackingRegelung auf eine positionsempfindliche Diode 22 geführt.

Selbstverständlich kann auch ein einfacher Strahlenteiler 23 verwendet werden, der einen Teil des zum Fizeau-System gehörenden Meßstrahls durchläßt und direkt auf die positionsempfindliche Diode 22 führt, die dann ein selbständiges Regelsystem steuert.

Der Meßalgorithmus des Fizeau-Systems mit der Messung von zwei benachbarten Minimalstellen wird erfindungsgemäß durch einen zusätzlichen Ablauf erweitert, der die Meßunsicherheit durch nicht vermeidbare extern aufgeprägte Polarisationen überwindet.

Zuerst wird durch automatisches Verstellen der Modulations-Frequenz über den Synthesizer in der Schleife 12 eine erste Minimalstelle in der Intensitäts-Meßschaltung 18 und dem phasenempfindlichen Detektor 17 aufgesucht. Der Detektor 17 mißt dabei die Phasenlage und die Amplitude der durch den Wobbelgenerator 14 erzeugten Frequenz-Modulation. Dies ist die erste Ableitung der Signalamplitude nach der Frequenz. Die Minimalstelle in der Signalamplitude entspricht einem Nulldurchgang der Amplitude der Frequenz-Modulation.

Nach dem Aufsuchen der für die Distanzberechnung benötigten zweiten Minimalstelle wird nun für die Feinmessung bei fester, der voraussichtlich dem Minimum entsprechenden Modulations-Frequenz die Grundpolarisation des Modulators 7 über die veränderbare Gleichspannungsquelle 10 über eine Periode gedreht. Dazu werden an den Modulator 7 schrittweise von 0 bis zur zweifachen Halbwellenspannung (z. B. 500 V) Gleichspannungen angelegt. Dabei werden jeweils die im phasenempfindlichen Detektor 17 auftretenden, über die Halbwellenspannung sinusförmig variierenden Werte in der Steuervorrichtung 19 gespeichert. Da die Lock-in-Werte des Detektors 17 die Werte der ersten Ableitung der Amplitudenwerte nach der Frequenz sind, ist der Mittelwert der gespeicherten Werte genau dann gleich Null, wenn die Modulations-Frequenz genau im Minimum des Wertes der Modulationsphase steht.

Mit einer zweiten und evtl. weiteren gleichartigen Messungen mit etwas verschobener Modulations-Frequenz kann bei von Null abweichendem Mittelwert die genaue Lage des Minimums interpoliert werden. Die Feinmessung kann in weiteren Minima, insbesondere auch bereits im ersten Minimum, wiederholt werden. Dies führt bei entsprechender Einrechnung in die vorhandenen Werte zu erhöhter Meßsicherheit und Genauigkeit.

In Fig. 2 ist ein Meßsystem dargestellt, bei dem der Absolut-Distanzmesser in den Interferometer-Strahlengang integriert ist. Das Interferometer-System 20 ist z. B. aus EP 0 194 941 A2 an sich bekannt. Ebenso soll das Fizeau-System 30 alle entsprechenden in Fig. 1 dargestellten und beschriebenen Elemente (4-19) enthalten.

Aus dem Interferometer-System 20 tritt ein unaufgeweiteter Laserstrahl aus, der linearpolarisiert, modenstabilisiert und über einen akusto-optischen Modulator frequenzverschoben ist. Dieser Strahl tritt in das Fizeau-System 30 über den in Fig. 1 dargestellten Polarisations-Analysator 4 ein und verläßt das System nach der zusätzlichen Polarisations-Modulation über den Kollimator 9.

Neu gegenüber der Anordnung nach Fig. 1 sind der Strahlteiler 31 und die Umlenkspiegel 32, 33, die dem Interferometer-System 20 zuzurechnen sind. Über diese Elemente wird ein Teil des vom Reflektor 26 zurückkehrenden Strahls 25 zur Interferenz mit dem Referenzstrahl des Interferometers gebracht. Die ihm gegenüber dem Referenzstrahl zusätzlich aufgeprägte Polarisations-Modulation stört die Interferenz nicht.

Über den Teilerspiegel 23 wird wie in Fig. 1 ein Teil des vom Reflektor 26 zurückkommenden Strahls auf den positionsempfindlichen Detektor 22 geleitet, über den ein Steuersignal für den Trackingspiegel erzeugt wird.

## Patentansprüche

1. Elektro-optisches Meßgerät für absolute Distanzen zu einem Zielpunkt mit Mittein zur Erzeugung eines kollimierten, linear polarisierten Laserstrahls, elektro-optischen Modulationsmitteln zur Modulation und Demodulation der Polarisation des Laserstrahls mit einer bestimmten Folge von Modulationsfrequenzen, einem mit dem Zielpunkt gekoppelten Reflektor, elektro-optischen Detektionsmitteln zur Bestimmung des Wertes der Modulationsphase im Bereich minimaler Helligkeit zwischen dem gesendeten modulierten und dem vom Zielpunkt empfangenen und demodulierten Laserstrahl und der zugehörigen Modulationsfrequenz, sowie mit Mitteln zur Berechnung der Distanz aus zwei benachbarten Modulationsfrequenzen mit der Modulationsphase Null, **dadurch gekennzeichnet, daß** die Modulationsmittel (5) einen Modulatorkristall (8; 7) mit Elektroden enthalten, die mit einer veränderbaren Gleichspannungsquelle (11; 10) verbunden sind, und eine Steuervorrichtung (19) vorgesehen ist, die die Bestimmung des Wertes der Modulationsphase im Bereich minimaler Helligkeit bei der zugehörigen Modulations-Frequenz nacheinander bei unterschiedlichen Gleichspannungswerten über eine volle Periode der Grundpolarisation des Modulatorkristalls (8; 7) auslöst, die gemessenen Werte speichert und mittelt, bei von Null abweichendem Mittelwert die Messung bei einer geringfügig veränderten Modulations-Frequenz wiederholt und durch Interpolation die dem Modulationsphasen-Mittelwert Null zugehörige Modulations-Frequenz bestimmt.

2. Meßgerät nach Anspruch 1, **dadurch gekennzeichnet, daß** die Modulationsmittel (5) einen nur frequenzmodulierten Modulatorkristall (8) und einen weiteren nur mit einer Gleichspannung beaufschlagten Modulatorkristall (7) enthalten.

3. Meßgerät nach Anspruche 1 oder 2, **dadurch gekennzeichnet, daß** die Steuervorrichtung (19) einen Generator zur stufenweisen Erhöhung der Gleichspannungswerte über eine Periode der Grundpolarisation enthält.

4. Meßgerät nach einem der Ansprüche 1 bis 3, **dadurch gekennzeichnet, daß** der Reflektor (26) im Raum frei bewegbar angeordnet ist und der Laserstrahl über einen automatisch gesteuerten Trackingspiegel (24) dem Reflektor (26) nachgeführt ist.

5. Meßgerät nach Anspruch 4, **dadurch gekennzeichnet, daß** der Laserstrahl über einen Teilerspiegel (23) auf den Trackingspiegel (24) geleitet wird.

6. Meßgerät nach Anspruch 5, **dadurch gekennzeichnet, daß** ein dichroitischer Teilerspiegel (23) vorgesehen ist.

7. Meßgerät nach Anspruch 6, **dadurch gekennzeichnet, daß** es mit einem Laser-Interferometer (20) zur relativen Distanzmessung für die Bewegung des Reflektors (26) gekoppelt ist, wobei der Interferometer-Strahlengang und der Meßgeräte-Strahlengang am dichroitischen Strahlteiler (23) zusammengeführt sind.

8. Meßgerät nach Anspruch 7, **dadurch gekennzeichnet, daß** die Laser-Wellenlänge des Interferometer-Strahlenbündels und des Meßgeräte-Strahlenbündels unterschiedlich sind.

9. Meßgerät nach einem der Ansprüche 1 bis 4, **dadurch gekennzeichnet, daß** der Polarisations-Modulator (8; 7) in den von einem Laser-Interferometer (20) kommenden Strahlengang vor dem Teilerspiegel (31) eingefügt ist, der einen Teil des vom Reflektor (26) zurückkommenden Strahls zur Überlagerung mit dem Referenzstrahlenbündel des Interferometers abzweigt.

## Claims

1. Electro-optical measuring device for absolute distances in relation to a target, comprising means for producing a collimated, linearly polarized laser beam, electro-optical modulation means for modulating and demodulating the polarization of the laser beam with a specific sequence of modulation frequencies, a reflector coupled to the target, electro-optical detection means for determining the value of the modulation phase in the range of minimum brightness between the sent modulated laser beam and the demodulated laser beam received by the target and the associated modulation frequency, and means for calculating the distance from two adjacent modulation frequencies with the modulation phase zero, **characterized in that** the modulation means (5) contain a modulator crystal (8; 7) with electrodes which are connected to a variable d.c. voltage source (11; 10), and a control device (19) is provided which triggers the determination of the value of the modulation phase in the range of minimum brightness at the associated modulation frequency in succession at different d.c. voltage values over a complete period of the basic polarization of the modulator crystal (8; 7), stores and averages the measured values, repeats the measurement at a slightly changed modulation frequency when the mean value deviates from zero, and determines, by interpolation, the modulation frequency associated with the modulation phase mean value zero.

2. Measuring device according to Claim 1, **characterized in that** the modulation means (5) contain a modulator crystal (8) which is only frequency-modulated and a further modulator crystal (7) only supplied with a d.c. voltage.

3. Measuring device according to either of Claims 1 and 2, **characterized in that** the control device (19) contains a generator for increasing the d.c. voltage values stepwise over a period of the basic polarization.

4. Measuring device according to any of Claims 1 to 3, **characterized in that** the reflector (26) is arranged freely movable in space and the laser beam tracks the reflector (26) by means of an automatically controlled tracking mirror (24).

5. Measuring device according to Claim 4, **characterized in that** the laser beam is fed via a splitter mirror (23) to the tracking mirror (24).

6. Measuring device according to Claim 5, **characterized in that** a dichroic splitter mirror (23) is provided.

7. Measuring device according to Claim 6, **characterized in that** it is coupled to a laser interferometer (20) for relative distance measurement for the movement of the reflector (26), the interferometer beam path and the measuring device beam path being combined at the dichroic beam splitter (23).

8. Measuring device according to Claim 7, **characterized in that** the laser wavelength of the interferometer beam and that of the measuring device beam are different.

9. Measuring device according to any of Claims 1 to 4, **characterized in that** the polarization modulator (8; 7) is inserted into the beam path from a laser interferometer (20), before the splitter mirror (31), which splits off part of the beam arriving from the reflector (26) in order to superimpose the reference beam of the interferometer on it.

## Revendications

1. Appareil de mesure opto-électronique, pour des distances absolues envers un point cible, avec des moyens pour générer un rayon laser collimaté, à polarisation linéaire, des moyens de modulation opto-électronique pour moduler et démoduler la polarisation du rayon laser avec une succession déterminée de fréquences de modulation, un réflecteur couplé à la cible, des moyens de détection opto-électronique pour déterminer la valeur de la phase de modulation dans la plage de la clarté minimale, entre le rayon laser envoyé et le rayon laser reçu par la cible et démodulé et la fréquence de modulation afférente, ainsi qu'avec des moyens pour calculer la distance à partir de deux fréquences de modulation voisines ayant la phase de modulation zéro, **caractérisé en ce que** les moyens de modulation (5) contiennent un cristal modulateur (8; 7) ayant des électrodes reliées à une source de tension continue (11; 10) modifiable, et un dispositif de commande (19) est prévu, qui déclenche la détermination de la valeur de la phase de modulation dans la plage de la clarté minimale pour la fréquence de modulation afférente, l'une après l'autre pour deux valeurs de tension continue différentes sur une pleine période de la polarisation de base du cristal modulateur (8; 7), qui stocke les valeurs mesurées et en forme la moyenne et, dans le cas où la valeur moyenne est différente de zéro, répète la mesure avec une légère variation de la fréquence de modulation et, par interpellation, détermine la fréquence de modulation afférente à la valeur moyenne zéro des phases de modulation.

2. Appareil de mesure selon la revendication 1, **caractérisé en ce que** les moyens de modulation (5) contiennent un cristal modulateur (8), qui n'est que modulé en fréquence, et un autre cristal modulateur (7), sollicité uniquement par une tension continue.

3. Appareil de mesure selon la revendication 1 ou 2, **caractérisé en ce que** le dispositif de commande (19) contient un générateur devant augmenter par degrés les valeurs de tension continues, sur la durée d'une période de polarisation de base.

4. Appareil de mesure selon l'une des revendications 1 à 3, **caractérisé en ce que** le réflecteur (26) est déplaçable librement dans l'espace et le rayon laser est ramené sur le réflecteur (26), par l'intermédiaire d'un miroir de poursuite (24) à commande automatique pour suivre

5. Appareil de mesure selon la revendication 4, **caractérisé en ce que** le rayon laser est dirigé sur le miroir de poursuite (24) par l'intermédiaire d'un miroir diviseur (23).

6. Appareil de mesure selon la revendication 5, **caractérisé en ce qu'**est prévu un miroir diviseur (23) dichroique.

7. Appareil de mesure selon la revendication 6, **caractérisé en ce qu'**il est couplé à un interféromètre laser (20) pour obtenir la mesure de distance relative pour le déplacement du réflecteur (26), le chemin des rayons de l'interféromètre et le chemin des rayons des appareils de mesure étant regroupés sur le diviseur de rayon dichroïque (23).

8. Appareil de mesure selon la revendication 7, **caractérisé en ce que** la longueur d'onde laser du faisceau de rayons d'interféromètre et celle du faisceau de rayons d'appareil de mesure sont différentes.

9. Appareil de mesure selon l'une des revendications 1 à 4, **caractérisé en ce que** le modulateur de polarisation (8; 7) est inséré dans le trajet du rayon venant d'un interféromètre (20) en amont du miroir diviseur (31), qui dérive une partie du rayon retournant du réflecteur (26) pour la superposer au faisceau de rayons de référence de l'interféromètre.
